# EUROPEAN PATENT SPECIFICATION

(11) **EP 4 379 346 B1**
(45) Date of publication and mention of the grant of the patent: **01.10.2025**
(21) Application number: 23212111.1
(22) Date of filing: 24.11.2023
(51) Int. Cl.: G01M 17/02

(54) **TIRE ROLLING RESISTANCE ESTIMATION SYSTEM AND METHOD**
SYSTEM UND VERFAHREN ZUR SCHÄTZUNG DES ROLLWIDERSTANDES EINES REIFENS
SYSTÈME ET PROCÉDÉ D'ESTIMATION DE RÉSISTANCE AU ROULEMENT DE PNEU

(30) Priority: 30.11.2022 US 202263385412 P; 10.11.2023 US 202318506589
(43) Date of publication of application: 05.06.2024
(73) Proprietor: The Goodyear Tire & Rubber Company, Akron, OH 44316 (US)
(72) Inventor: BALAGA, Sanjay Raghav, 2716 Luxembourg (LU); KOEPPEN, Stefan Paul, 54634 Bitburg (DE); SINGH, Kanwar Bharat, 7363 Lorentzweiler (LU); KAREN, Patrick, 54329 Konz (DE)
(74) Representative: Kutsch, Bernd

(56) References cited:
- US-A1- 2022 299 405
- MARS ET AL: "An Analytical Model for the Transient Rolling Resistance Behavior of Tires", vol. 27, no. 3, 1 July 1999 (1999-07-01), pages 161 - 175, XP009544922, ISSN: 0090-8657, Retrieved from the Internet <URL:http://meridian.allenpress.com/tst/article-pdf/27/3/161/1974629/1_2135982.pdf> DOI: 10.2346/1.2135982
- EJSMONT JERZY ET AL: "Influence of temperature on the tyre rolling resistance", INTERNATIONAL JOURNAL OF AUTOMOTIVE TECHNOLOGY, THE KOREAN SOCIETY OF AUTOMOTIVE ENGINEERS, HEIDELBERG, vol. 19, no. 1, 3 October 2017 (2017-10-03), pages 45 - 54, XP036332008, ISSN: 1229-9138, [retrieved on 20171003], DOI: 10.1007/S12239-018-0005-4

## Description

### Field of the Invention

The invention relates generally to tire monitoring. More particularly, the invention relates to systems that monitor and estimate certain characteristics of a tire. Specifically, the invention is directed to a system that estimates the rolling resistance coefficient of a tire under transient driving or operating conditions.

### Background of the Invention

Multiple tires support a vehicle, and transmit driving and braking forces from the vehicle to the road surface. It is often beneficial to estimate characteristics of a tire.

One characteristic that is beneficial to estimate is the rolling resistance of a tire. The rolling resistance of a tire is the amount of energy that is needed to enable the tire to roll over a surface. Estimation or prediction of tire rolling resistance is important, as it enables prediction of the driving range of a vehicle. Estimation of tire rolling resistance also enables prediction of energy loss, including fuel consumption for internal combustion engines and battery consumption for electric vehicles. In addition, estimates of tire rolling resistance are employed in force allocation determinations, which may be useful in braking and other control systems of the vehicle.

It is desirable to estimate the rolling resistance of a tire with the highest possible accuracy, but rolling resistance can be difficult to accurately predict, particularly in view of dynamic driving conditions. More particularly, the rolling resistance of a tire is a transient value or characteristic. As a tire is driven, its temperature generally increases, and rolling resistance changes as the tire temperature increases.

In the prior art, estimates of tire rolling resistance have been determined through rolling resistance lab testing or other controlled environments. However, it is difficult to extrapolate results from rolling resistance lab tests to accurately predict rolling resistance during dynamic driving conditions. For example, the ambient temperature in lab testing is often set at a fixed value, such as about 25 degrees Celsius. Prior art estimation techniques do not include an appropriate thermal model that accounts for tire temperature prediction during driving and tire warm-up. A tire rolling resistance estimation system is disclosed in MARS ET AL: "An Analytical Model for the Transient Rolling Resistance Behavior of Tires",TIRE SCIENCE AND TECHNOLOGY, TIRE SOCIETY INC, US.

As a result, there is a need in the art for a system that provides an accurate estimation of the rolling resistance of a tire under transient driving or operating conditions.

### Summary of the Invention

The invention relates to a system in accordance with claim 1 and to a method in accordance with claim 14.

Dependent claims refer to preferred embodiments of the invention.

According to an aspect of an exemplary embodiment of the invention, a tire rolling resistance estimation system is provided. The system estimates a real-time rolling resistance coefficient of a tire supporting a vehicle, and includes a tire sensor unit mounted to the tire, in which the tire sensor unit measures an inflation pressure of the tire and a temperature of the tire. A processor is in electronic communication with the tire sensor unit. A steady state coefficient determination module is in electronic communication with the processor, receives a plurality of inputs, and determines a steady state rolling resistance coefficient of the tire. A steady state tire temperature module is in electronic communication with the processor, receives the steady state rolling resistance coefficient of the tire from the steady state coefficient determination module, and estimates a steady state tire temperature of the tire. A real-time rolling resistance coefficient module is in electronic communication with the processor and receives the steady state tire temperature of the tire from the steady state tire temperature module. The real-time rolling resistance coefficient module estimates a real-time rolling resistance coefficient of the tire from the steady state rolling resistance coefficient and a difference between the steady state tire temperature and a current tire temperature from the tire sensor unit.

### Brief Description of the Drawings

The invention will be described by way of example and with reference to the accompanying drawings, in which:
Figure 1 is a schematic perspective view of a vehicle that includes a tire which employs an exemplary embodiment of a tire rolling resistance estimation system of the present invention;
Figure 2 is a schematic representation of data transmission to a cloud-based server and to a device;
Figure 3 is a schematic diagram of an exemplary embodiment of the tire rolling resistance estimation system of the present invention;
Figure 4 is a graphical representation of an aspect of the exemplary embodiment of the tire rolling resistance estimation system shown in Figure 3;
Figure 5 is a graphical representation of another aspect of the exemplary embodiment of the tire rolling resistance estimation system shown in Figure 3;
Figure 6 is a graphical representation of another aspect of the exemplary embodiment of the tire rolling resistance estimation system shown in Figure 3;
Figure 7 is a graphical representation of another aspect of the exemplary embodiment of the tire rolling resistance estimation system shown in Figure 3;
Figure 8 is a graphical representation of another aspect of the exemplary embodiment of the tire rolling resistance estimation system shown in Figure 3; and
Figure 9 is a graphical representation of another aspect of the exemplary embodiment of the tire rolling resistance estimation system shown in Figure 3.

Similar numerals refer to similar parts throughout the drawings.

### Definitions

"ANN" or "artificial neural network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer.

"Circumferential" means lines or directions extending along the perimeter of the surface of the annular tread perpendicular to the axial direction.

"Equatorial centerplane" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Lateral edges" means a line tangent to the axially outermost tread contact patch or footprint of the tire as measured under normal load and tire inflation, the lines being parallel to the equatorial centerplane.

"Net contact area" means the total area of ground contacting tread elements between the lateral edges around the entire circumference of the tread of the tire divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by a shape having adjacent grooves.

### Detailed Description of Preferred Embodiments of the Invention

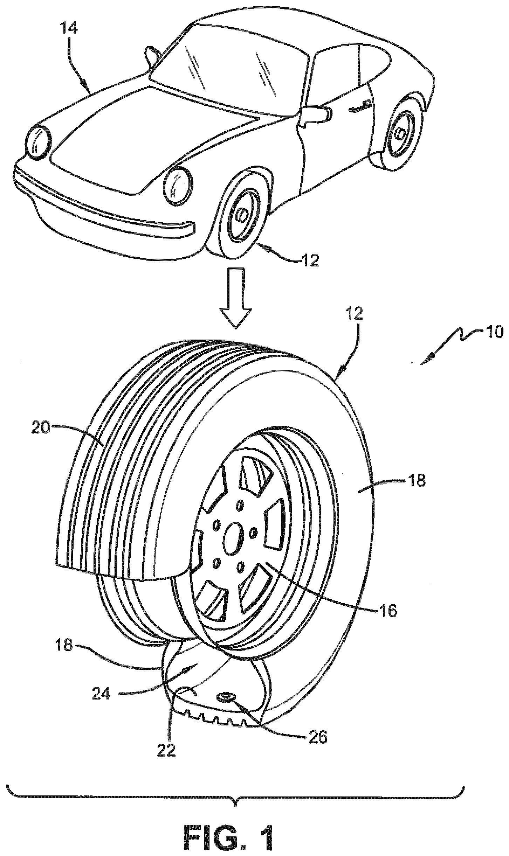

With reference to Figures 1 through 9, an exemplary embodiment of the tire rolling resistance estimation system 10 of the present invention is shown.

With particular reference to Figure 1, the system 10 estimates the rolling resistance of each tire 12 supporting a vehicle 14. It is to be understood that the vehicle 14 may be any vehicle type, and is shown by way of example as a passenger car. The tires 12 are of conventional construction, and each tire is mounted on a respective wheel 16 as known to those skilled in the art. Each tire 12 includes a pair of sidewalls 18 that extend to a circumferential tread 20, which wears with age from road abrasion. An innerliner 22 is disposed on the inner surface of the tire 12, and when the tire is mounted on the wheel 16, an internal cavity 24 is formed, which is filled with a pressurized fluid, such as air.

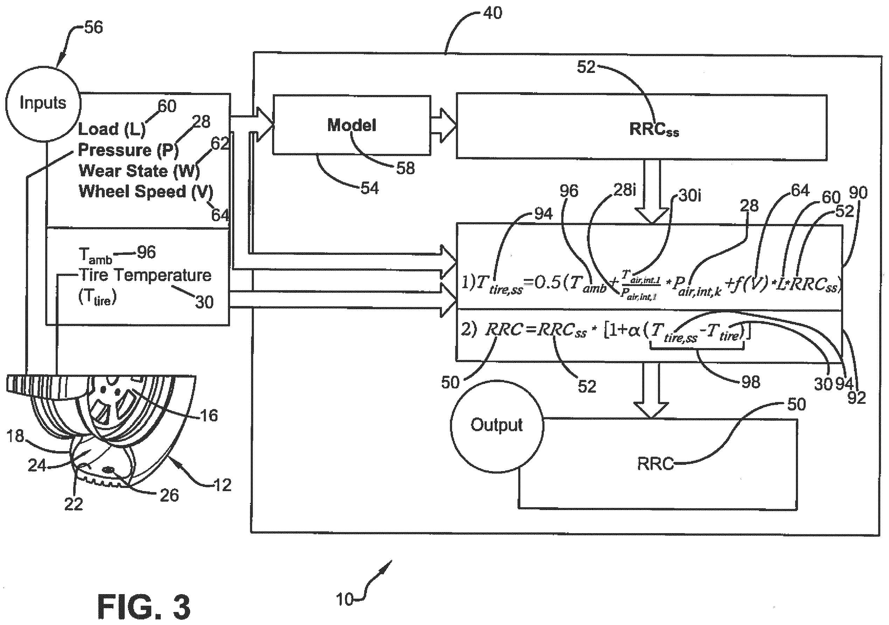

A tire sensor unit 26 is mounted to each tire 12, such as by attachment to the innerliner 22 by means such as an adhesive, and measures certain characteristics of the tire, such as tire inflation pressure 28 (Figure 3) and tire temperature 30. For this reason, the tire sensor unit 26 preferably includes a pressure sensor and a temperature sensor, and may be of any known configuration, such as a tire pressure management system (TPMS) sensor. The tire sensor unit 26 may also include electronic memory capacity for storing identification (ID) information for each tire 12, known as tire ID information. It is to be understood that the tire sensor unit 26 may be mounted on a component or structure of the tire 12 other than the innerliner 22.

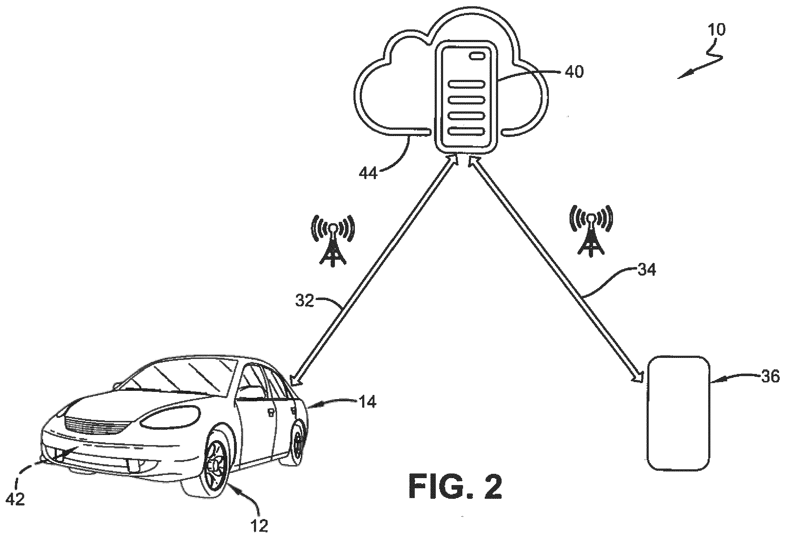

Turning to Figure 2, aspects of the tire rolling resistance estimation system 10 preferably are executed on a processor 40. The processor 40 enables input of parameters and execution of specific techniques, to be described below, which are stored in a suitable storage medium and are in electronic communication with the processor. The processor 40 may be mounted on the vehicle 14, may be in communication with an electronic control system 42 of the vehicle, such as the vehicle CAN bus system, and/or may be a remote processor in a cloud-based server 44.

Wireless transmission means 32, such as an antenna, may wirelessly send the measured tire pressure 28 and tire temperature 30 from the tire sensor unit 26 (Figure 1) to the processor 40. Output from the tire rolling resistance estimation system 10 may be wirelessly transmitted by an antenna 34 from the processor 40 to a display or controller device 36 and/or to the electronic control system 42 of the vehicle 14.

Referring to Figure 3, the tire rolling resistance estimation system 10 provides an estimation of the rolling resistance of the tire 12. Rolling resistance is often expressed as a coefficient multiplied by normal force, and the coefficient is referred to as the rolling resistance coefficient (RRc), indicated at 50. The goal of the system 10 is to predict or estimate an accurate real-time rolling resistance coefficient 50 under transient driving or operating conditions of the tire 12.

In the tire rolling resistance estimation system 10, a steady state rolling resistance coefficient 52 is determined with a steady state coefficient determination module 54. The steady state coefficient determination module 54 preferably employs a regression model 58 with multiple inputs 56. A preferred regression model 58 is a multiple linear regression model, which determines the relationship between multiple independent variables, which are the inputs 56, and one dependent variable, which is the steady state rolling resistance coefficient 52. By way of example, the inputs 56 may include a tire load 60, the tire inflation pressure 28, a wear state 62 of the tire 12, and a rotational or rolling speed of the tire, which is referred to as a wheel speed 64.

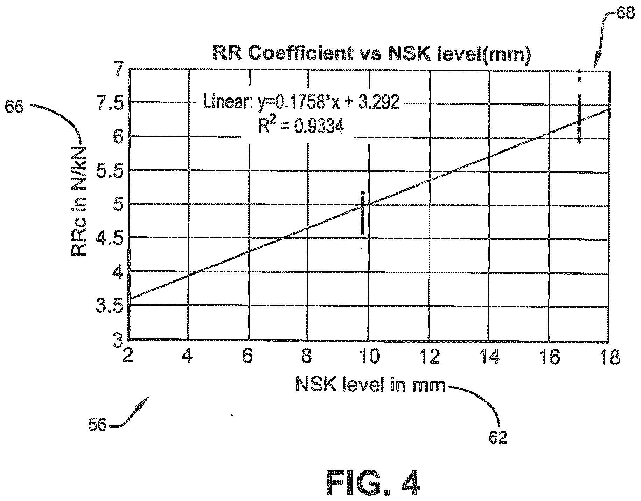

With additional reference to Figure 4, turning to the input 56 of the tire wear state 62, the tire wear state may be directly measured as an amount of remaining non-skid depth of the tread 20, or may be calculated according to any known method. An exemplary method for the calculation of tire wear state 62 is shown and described in U.S. Published Patent Application Number 2019/0001757.

Rolling resistance lab testing or controlled environment testing may be performed to correlate measured or calculated values of the tire wear state 62 to corresponding rolling resistance values 66 in a wear component 68 of the steady state coefficient determination module 54. In this manner, one component of the multiple linear regression model 58 of the steady state coefficient determination module 54 is the wear component 68.

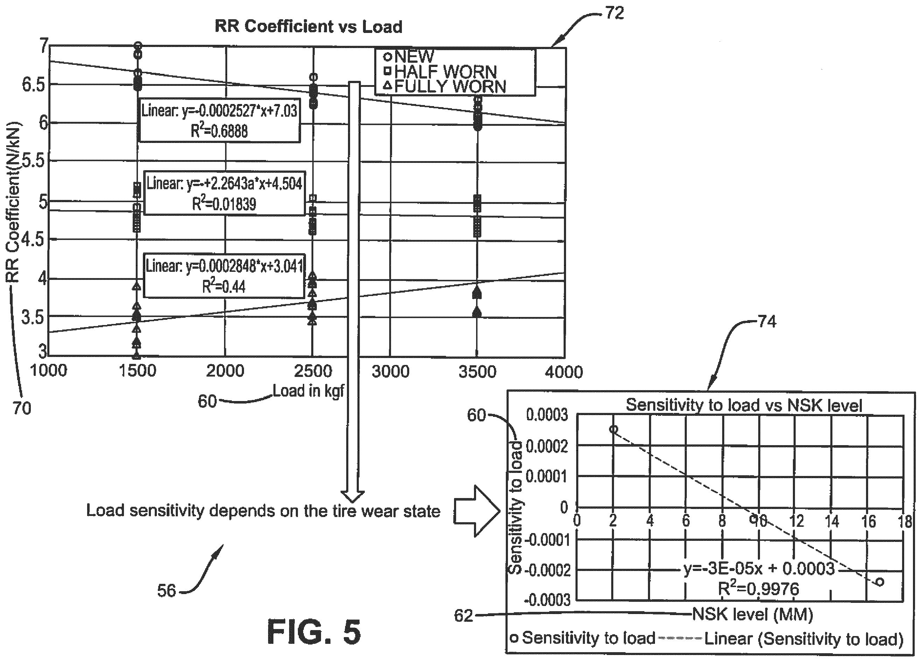

Turning to Figure 5, for the input 56 of the tire load 60, the calculation of tire load may be performed according to any known method. Exemplary methods for the calculation of tire load 60 are shown and described in U.S. Patent Numbers 9,120,356 and 10,245,906.

Rolling resistance lab testing or controlled environment testing may be performed to correlate calculated values of the tire load 60 to corresponding rolling resistance values 70 in a load component 72 of the steady state coefficient determination module 54. Preferably, the tire wear state 62 is taken into consideration in generating the load component 72 due to a correlation 74 between the tire load 60 and the tire wear state. In this manner, another component of the multiple linear regression model 58 of the steady coefficient state determination module 54 is the load component 72.

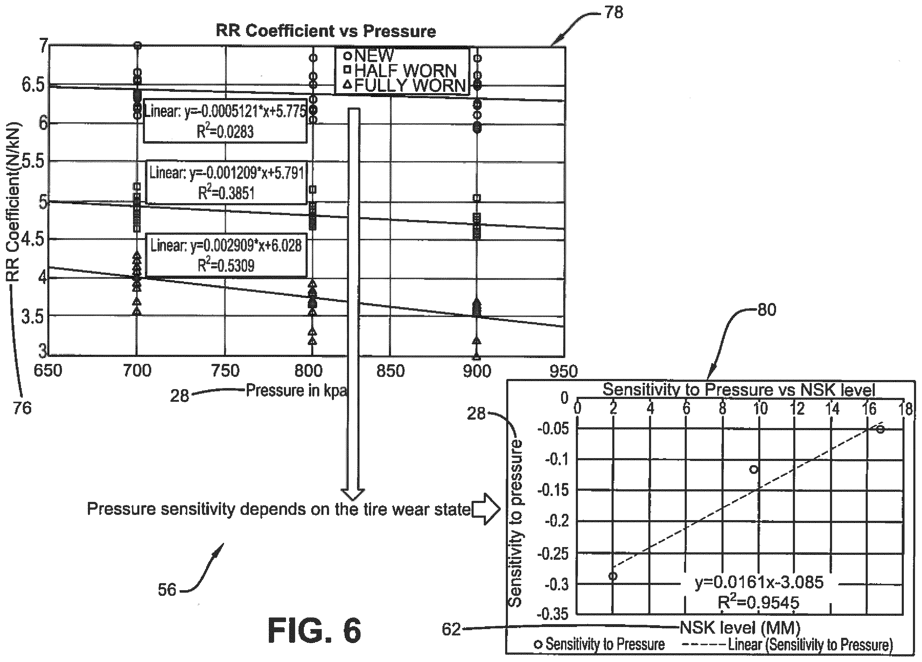

Referring to Figure 6, for the input 56 of the tire inflation pressure 28, the inflation pressure preferably is provided by the tire sensor unit 26. Rolling resistance lab testing or controlled environment testing may be performed to correlate predetermined values of the tire inflation pressure 28 to corresponding rolling resistance values 76 in a pressure component 78 of the steady state coefficient determination module 54. Preferably, the tire wear state 62 is taken into consideration in generating the pressure component 78 due to a correlation 80 between tire inflation pressure 28 and the tire wear state. In this manner, another component of the multiple linear regression model 58 of the steady state coefficient determination module 54 is the pressure component 78.

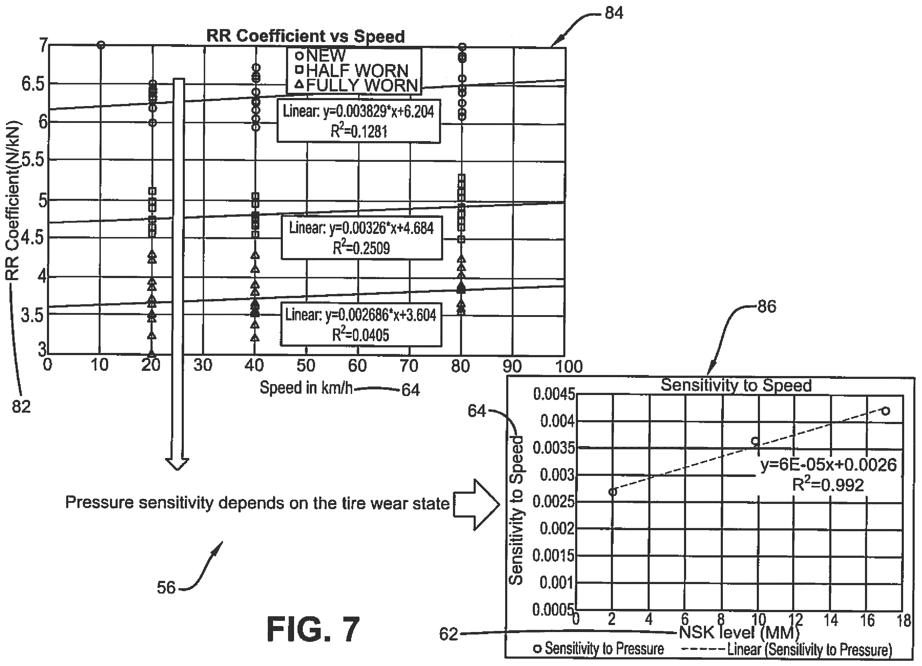

Referring to Figure 7, for the input 56 of the wheel speed 64, the wheel speed preferably is provided by a tire-mounted, wheel-mounted, or vehicle mounted speed or acceleration sensor unit. Rolling resistance lab testing or controlled environment testing may be performed to correlate predetermined values of the wheel speed 64 to corresponding rolling resistance values 82 in a wheel speed component 84 of the steady state coefficient determination module 54. Preferably, the tire wear state 62 is taken into consideration in generating the wheel speed component 84 due to a correlation 86 between wheel speed 64 and the tire wear state. In this manner, another component of the multiple linear regression model 58 of the steady state coefficient determination module 54 is the wheel speed component 84.

Returning to Figure 3, the steady state coefficient determination module 54 thus determines the relationship between the independent variables of the tire load 60, the tire inflation pressure 28, the tire wear state 62, and the wheel speed 64, and the dependent variable of the steady state rolling resistance coefficient 52. The relationship is determined by the multiple linear regression model 58, which employs the wear component 68, the load component 72, the pressure component 78, and the wheel speed component 84 to determine the steady state rolling resistance coefficient 52.

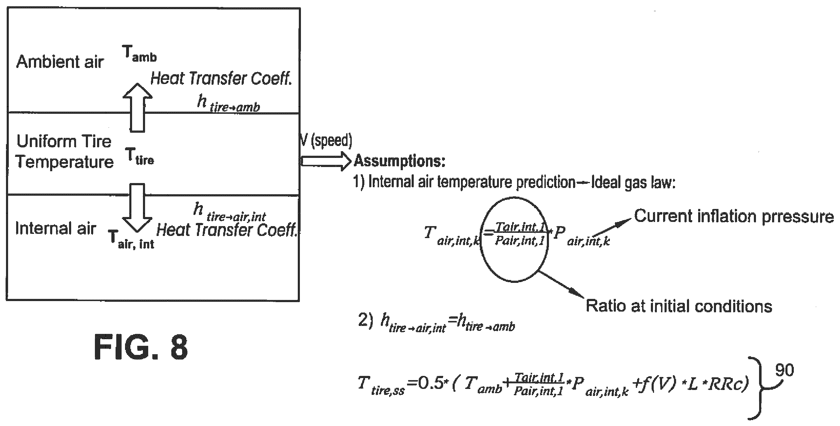

The tire rolling resistance estimation system 10 also includes a steady state tire temperature module 90 and a real-time rolling resistance coefficient module 92. With additional reference to Figure 8, the steady state tire temperature module 90 employs a combination of data-driven and physics-based approaches to build a semi-empirical model for prediction of a steady state tire temperature 94, as opposed to prior art techniques, which solely employed a physics-based approach.

The steady state tire temperature module 90 estimates the steady state tire temperature 94 based on the expected the steady state rolling resistance coefficient 52 from the steady state coefficient determination module 54, the tire load 60, and the wheel speed 64. The steady state tire temperature module 90 also accounts for an ambient temperature 96, which may be input from a wheel-mounted sensor, a vehicle-mounted temperature sensor, and/or a weather-based service. The steady state tire temperature module 90 further accounts for a ratio of an initial measured tire temperature 30i from the tire sensor unit 26 to an initial measured tire inflation pressure 28i from the tire sensor unit, and a current measured tire inflation pressure 28 from the tire sensor unit. With these inputs, the steady state tire temperature module 90 determines the steady state tire temperature 94.

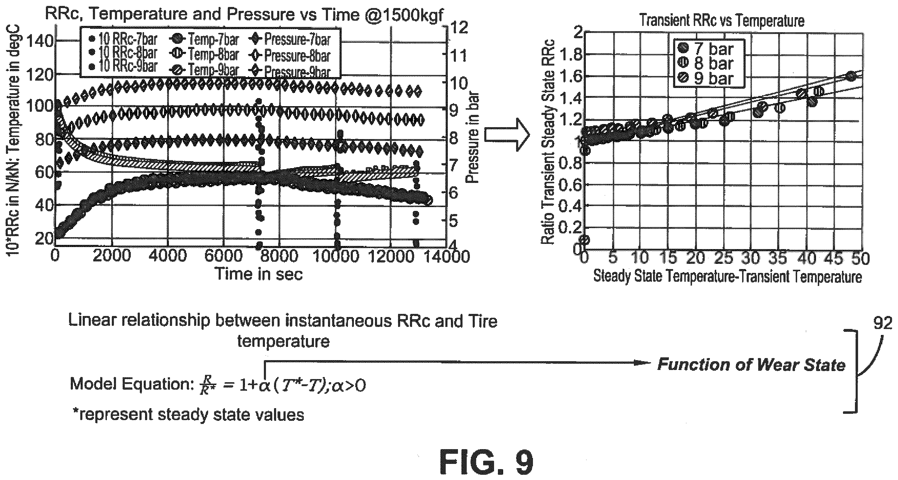

Referring to Figures 3 and 9, the real-time rolling resistance coefficient module 92 preferably employs a linear model to estimate the real-time rolling resistance coefficient 50. The estimation of the real-time rolling resistance coefficient 50 is based on the expected the steady state rolling resistance coefficient 52 and a difference 98 between the steady state tire temperature 94 and the current tire temperature 30 from the tire sensor unit 26. The difference 98 between the steady state tire temperature 94 and the current tire temperature 30 indicates how far the tire 12 is from a steady state. To account for the tire wear state 62 in the real-time rolling resistance coefficient module 92, a coefficient α is employed, which is a function of the tire wear state.

The real-time rolling resistance coefficient module 92 thus generates the real-time rolling resistance coefficient 50, which accurately reflects current temperature 30 of the tire 12. As shown in Figure 2, the rolling resistance coefficient 50 may be wirelessly transmitted by an antenna 34 from the processor 40 to a display or controller device 36 and/or to the electronic control system 42 of the vehicle 14. The rolling resistance coefficient 50 from the tire rolling resistance estimation system 10 may thus be employed by systems that are in electronic communication with the electronic control system 42 of the vehicle 14 to predict the driving range of the vehicle, predict energy loss, and/or provide force allocation determinations.

In this manner, the tire rolling resistance estimation system 10 provides an accurate estimate of the real-time rolling resistance coefficient 50 of the tire 12 under transient driving or operating conditions. The system 10 includes the tire wear state 62 in the determination of the steady state rolling resistance coefficient 52, in the determination of the steady state tire temperature 94, and in the determination of the real-time rolling resistance coefficient 50. The system 10 also includes the tire inflation pressure 28 as an influencing variable in the determination of the steady state tire temperature 94. The system 10 is data-driven, leveraging the measured tire pressure 28 and temperature 30 from the tire sensor unit 26.

The present invention also includes a method for estimating the rolling resistance of a tire. The method includes steps in accordance with the description that is presented above and shown in Figures 1 through 9.

It is to be understood that the structure and method of the above-described tire rolling resistance estimation system may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications include radio frequency (RF) and Bluetooth^{®} communications.

## Claims

1. A tire rolling resistance estimation system, the system (10) estimating a real-time rolling resistance coefficient (50) of a tire (12) supporting a vehicle (14), the system (10) including:
a tire sensor unit (26) mounted to the tire (12), the tire sensor unit (26) being configured for measuring an inflation pressure of the tire and a temperature of the tire;
a processor (40) in electronic communication with the tire sensor unit (26);
a steady state coefficient determination module (54) in electronic communication with the processor (40), the steady state coefficient determination module (54) being configured for receiving a plurality of inputs and for determining a steady state rolling resistance coefficient of the tire;
a steady state tire temperature module (90) in electronic communication with the processor (40), the steady state tire temperature module (90) being configured for receiving the steady state rolling resistance coefficient of the tire from the steady state coefficient determination module (54) and for estimating a steady state tire temperature of the tire; and
a real-time rolling resistance coefficient module (92) in electronic communication with the processor (40), the real-time rolling resistance coefficient (92) module being configured for receiving the steady state tire temperature of the tire from the steady state tire temperature module and for estimating a real-time rolling resistance coefficient of the tire from the steady state rolling resistance coefficient and a difference between the steady state tire temperature and a current tire temperature from the tire sensor unit (26).

2. The system of claim 1, wherein the real-time rolling resistance coefficient is the coefficient under transient operating conditions of the tire (12).

3. The system of claim 1 or 2, wherein the steady state coefficient determination module (54) is configured for employing a regression model (58).

4. The system of at least one of the previous claims, wherein the regression model (58) includes a multiple linear regression model.

5. The system of at least one of the previous claims, wherein the plurality of inputs include at least one of a tire load, an inflation pressure of the tire, a wear state of the tire, and a wheel speed of the tire.

6. The system of at least one of the previous claims, wherein the steady state coefficient determination module (54) includes a wear component, the wear component being configured for correlating values of the wear state of the tire to corresponding rolling resistance values; and/or wherein the steady state coefficient determination module (54) includes a load component, the load component being configured for correlating values of the tire load to corresponding rolling resistance values and, optionally, the load component being configured for accounting for the wear state of the tire.

7. The system of at least one of the previous claims, wherein the steady state coefficient determination module (54) includes a pressure component, the pressure component being configured for correlating values of the tire inflation pressure to corresponding rolling resistance values and, optionally, the pressure component being configured for accounting for the wear state of the tire.

8. The system of at least one of the previous claims, wherein the steady state coefficient determination module (54) includes a wheel speed component, the wheel speed component being configured for correlating values of the wheel speed to corresponding rolling resistance values and, optionally, the wheel speed component being configured for accounting for the wear state of the tire.

9. The system of at least one of the previous claims, wherein the steady state tire temperature module (90) is configured for estimating the steady state tire temperature based on the steady state rolling resistance coefficient of the tire, a tire load, and a wheel speed of the tire and, optionally, the steady state tire temperature module being configured for accounting for an ambient temperature.

10. The system of at least one of the previous claims, wherein the steady state tire temperature module (90) is configured for accounting for a ratio of an initial measured tire temperature from the tire sensor unit (26) to an initial measured tire inflation pressure from the tire sensor unit.

11. The system of at least one of the previous claims, wherein the steady state tire temperature module (90) is configured for accounting for a current measured tire inflation pressure from the tire sensor unit.

12. The system of at least one of the previous claims, wherein the real-time rolling resistance coefficient module (92) includes a linear model (58).

13. The system of at least one of the previous claims, wherein the real-time rolling resistance coefficient module (92) is configured for employing a function of the tire wear state.

14. A tire rolling resistance estimation method, the method estimating a real-time rolling resistance coefficient of a tire (12) supporting a vehicle (14), the method including:
providing a tire sensor unit (26) mounted to the tire, the tire sensor unit measuring an inflation pressure of the tire and a temperature of the tire;
providing a processor (40) in electronic communication with the tire sensor unit (26);
providing a steady state coefficient determination module (54) in electronic communication with the processor, the steady state coefficient determination module receiving a plurality of inputs and determining a steady state rolling resistance coefficient of the tire;
providing a steady state tire temperature module (90) in electronic communication with the processor, the steady state tire temperature module receiving the steady state rolling resistance coefficient of the tire from the steady state coefficient determination module and estimating a steady state tire temperature of the tire; and
providing a real-time rolling resistance coefficient module (92) in electronic communication with the processor, the real-time rolling resistance coefficient module receiving the steady state tire temperature of the tire from the steady state tire temperature module and estimating a real-time rolling resistance coefficient of the tire from the steady state rolling resistance coefficient and a difference between the steady state tire temperature and a current tire temperature from the tire sensor unit (26).

15. The method of claim 14 wherein the method is implemented using a system (10) in accordance with at least one of the claims 1 to 13.

## Patentansprüche

1. System zur Schätzung des Rollwiderstands eines Reifens, wobei das System (10) einen Koeffizienten des Rollwiderstands in Echtzeit (50) eines ein Fahrzeug (14) tragenden Reifens (12) schätzt, wobei das System (10) Folgendes umfasst:
eine Reifensensoreinheit (26), die an dem Reifen (12) angebracht ist, wobei die Reifensensoreinheit (26) derart ausgebildet ist, dass sie einen Luftdruck des Reifens und eine Temperatur des Reifens misst;
einen Prozessor (40), der elektronisch mit der Reifensensoreinheit (26) verbunden ist;
ein Modul (54) zum Bestimmen des Koeffizienten des stationären Zustands, das elektronisch mit dem Prozessor (40) verbunden ist, wobei das Modul (54) zum Bestimmen des Koeffizienten des stationären Zustands derart ausgebildet ist, dass es eine Anzahl von Eingaben empfängt und dass es einen Koeffizienten des Rollwiderstands in dem stationären Zustand des Reifens bestimmt;
ein Modul der Temperatur des Reifens in dem stationären Zustand (90), das elektronisch mit dem Prozessor (40) verbunden ist; wobei das Modul der Temperatur des Reifens in dem stationären Zustand (90) derart ausgebildet ist, dass es den Koeffizienten des Rollwiderstands des Reifens in dem stationären Zustand von dem Modul (54) zum Bestimmen des Koeffizienten des stationären Zustands empfängt und dass es eine Temperatur des Reifens in dem stationären Zustand schätzt; und
ein Modul des Rollwiderstands des Reifens (92) in Echtzeit, das elektronisch mit dem Prozessor (40) verbunden ist; wobei der Koeffizient des Rollwiderstands des Reifens in Echtzeit (92) derart ausgebildet ist, dass er die Temperatur des Reifens in dem stationären Zustand von dem Modul der Temperatur des Reifens in dem stationären Zustand von dem Modul der Temperatur des Reifens in dem stationären Zustand empfängt und dass er einen Koeffizienten des Rollwiderstands des Reifens in Echtzeit aus dem Koeffizienten des Rollwiderstands des Reifens in dem stationären Zustand und von einer Differenz zwischen der Temperatur des Reifens in dem stationären Zustand und der aktuellen Temperatur des Reifens von der Reifensensoreinheit (26).

2. System nach Anspruch 1, wobei der Koeffizient des Rollwiderstands in Echtzeit den Koeffizienten darstellt, der unter transienten Betriebsbedingungen des Reifens (12) erzielt wird.

3. System nach Anspruch 1 oder 2, wobei das Modul (54) zum Bestimmen des Koeffizienten des stationären Zustands derart ausgebildet ist, dass es ein Regressionsmodell (58) verwendet.

4. System nach mindestens einem der vorhergehenden Ansprüche, wobei das Regressionsmodell (58) ein multiples lineares Regressionsmodell umfasst.

5. System nach mindestens einem der vorhergehenden Ansprüche, wobei die oben genannten mehreren Eingaben mindestens eine Eingabe umfassen, die aus einer Last des Reifens, einem Luftdruck des Reifens, einem Verschleißzustand des Reifens und einer Radgeschwindigkeit des Reifens ausgewählt ist.

6. System nach mindestens einem der vorhergehenden Ansprüche, wobei das Modul (54) zum Bestimmen des Koeffizienten des stationären Zustands eine Verschleißkomponente umfasst; wobei die Verschleißkomponente derart ausgebildet ist, dass sie eine Korrelation zwischen Werten des Verschleißzustands des Reifens und entsprechenden Werten des Rollwiderstands herstellt; und/oderwobei das Modul (54) zum Bestimmen des Koeffizienten des stationären Zustands eine Lastkomponente umfasst; wobei die Lastkomponente derart ausgebildet ist, dass sie eine Korrelation zwischen Werten der Last des Reifens und entsprechenden Werten des Rollwiderstands herstellt; und optional wobei die Lastkomponente derart ausgebildet ist, dass sie den Verschleißzustand des Reifens berücksichtigt.

7. System nach mindestens einem der vorhergehenden Ansprüche, wobei das Modul (54) zum Bestimmen des Koeffizienten des stationären Zustands eine Druckkomponente umfasst; wobei die Druckkomponente derart ausgebildet ist, dass sie eine Korrelation zwischen Werten des Luftdrucks des Reifens und entsprechenden Werten des Rollwiderstands herstellt; und optional wobei die Druckkomponente ausgebildet ist, dass sie den Verschleißzustand des Reifens berücksichtigt.

8. System nach mindestens einem der vorhergehenden Ansprüche, wobei das Modul (54) zum Bestimmen des Koeffizienten des stationären Zustands eine Radgeschwindigkeitskomponente umfasst; wobei die Radgeschwindigkeitskomponente derart ausgebildet ist, dass sie eine Korrelation zwischen Werten der Radgeschwindigkeit und entsprechenden Werten des Rollwiderstands herstellt; und optional wobei die Radgeschwindigkeitskomponente derart ausgebildet ist, dass sie den Verschleißzustand des Reifens berücksichtigt.

9. System nach mindestens einem der vorhergehenden Ansprüche, wobei das Modul der Temperatur des Reifens in dem stationären Zustand (90) derart ausgebildet ist, dass es die Temperatur des Reifens in dem stationären Zustand auf der Grundlage des Koeffizienten des Rollwiderstands in dem stationären Zustand des Reifens, einer Reifenlast und einer Radgeschwindigkeit des Reifens schätzt; und optional wobei das Modul der Temperatur des Reifens in dem stationären Zustand derart ausgebildet ist, dass es eine Umgebungstemperatur berücksichtigt.

10. System nach mindestens einem der vorstehenden Ansprüche, wobei das Modul der Temperatur des Reifens in dem stationären Zustand (90) derart ausgebildet ist, dass es ein Verhältnis zwischen einer Anfangstemperatur des Reifens, die von der Reifensensoreinheit (26) gemessen wurde, und einem Anfangsdruck des Reifens, der von der Reifensensoreinheit gemessen wurde, berücksichtigt.

11. System nach mindestens einem der vorhergehenden Ansprüche, wobei das Modul der Temperatur des Reifens in dem stationären Zustand (90) derart ausgebildet ist, dass es einen aktuellen Luftdruck des Reifens berücksichtigt, der von der Reifensensoreinheit gemessen wurde.

12. System nach mindestens einem der vorhergehenden Ansprüche, wobei der Koeffizient des Rollwiderstands in Echtzeit (92) ein lineares Modell (58) umfasst.

13. System nach mindestens einem der vorhergehenden Ansprüche, wobei der Koeffizient des Rollwiderstands in Echtzeit (92) derart ausgebildet ist, dass er eine Funktion des Verschleißzustands des Reifens verwendet.

14. Verfahren zur Schätzung des Rollwiderstands eines Reifens, wobei das Verfahren einen Koeffizienten des Rollwiderstands in Echtzeit eines ein Fahrzeug (14) tragenden Reifens (12) schätzt, wobei das Verfahren das Folgende umfasst:
das Bereitstellen einer Reifensensoreinheit (26), die an dem Reifen angebracht ist, wobei die Reifensensoreinheit einen Luftdruck des Reifens und eine Temperatur des Reifens misst;
das Bereitstellen eines Prozessors (40), der elektronisch mit der Reifensensoreinheit (26) verbunden ist;
das Bereitstellen eines Moduls zum Bestimmen des Koeffizienten des stationären Zustands, das elektronisch mit dem Prozessor verbunden ist; wobei das Modul zum Bestimmen des Koeffizienten des stationären Zustands eine Anzahl von Eingaben empfängt und einen Koeffizienten des Rollwiderstands in dem stationären Zustand des Reifens schätzt;
das Bereitstellen eines Moduls der Temperatur des Reifens in dem stationären Zustand (90), das elektronisch mit dem Prozessor (40) verbunden ist; wobei das Modul der Temperatur des Reifens in dem stationären Zustand den Koeffizienten des Rollwiderstands des Reifens in dem stationären Zustand empfängt und eine Temperatur des Reifens in dem stationären Zustand schätzt; und
das Bereitstellen eines Moduls des Rollwiderstands des Reifens (92) in Echtzeit, das elektronisch mit dem Prozessor (40) verbunden ist;
wobei das Modul des Koeffizienten des Rollwiderstands des Reifens in Echtzeit die Temperatur des Reifens in dem stationären Zustand von dem Modul der Temperatur des Reifens in dem stationären Zustand empfängt und einen Koeffizienten des Rollwiderstands des Reifens in Echtzeit aus dem Koeffizienten des Rollwiderstands des Reifens in dem stationären Zustand und einer Differenz zwischen der Temperatur des Reifens in dem stationären Zustand und der aktuellen Temperatur des Reifens von der Reifensensoreinheit schätzt.

15. Verfahren nach Anspruch 14, wobei das Verfahren unter Verwendung eines Systems (10) gemäß mindestens einem der Ansprüche 1 bis 13 durchgeführt wird.

## Revendications

1. Système d'estimation de la résistance au roulement manifestée par un bandage, dans lequel le système (10) estime un coefficient (50) de résistance au roulement d'un bandage (12) en temps réel, qui supporte un véhicule (14), dans lequel le système (10) englobe :
une unité (26) faisant office de capteur pour un bandage, qui est montée sur le bandage (12), dans lequel l'unité (26) faisant office de capteur pour un bandage est configurée d'une manière telle qu'elle mesure une pression de gonflage du bandage et une température du bandage ;
- un processeur (40) qui est mis en communication par voie électronique avec l'unité (26) faisant office de capteur pour un bandage ;
un module de détermination du coefficient de l'état de régime permanent (54) qui est mis en communication par voie électronique avec le processeur (40) ; dans lequel le module de détermination du coefficient de l'état de régime permanent (54) est configuré d'une manière telle qu'il reçoit un certain nombre d'entrées et d'une manière telle qu'il détermine un coefficient de résistance au roulement du bandage en état de régime permanent ;
un module de la température du bandage en état de régime permanent (90) qui est mis en communication par voie électronique avec le processeur (40) ; dans lequel le module de la température du bandage en état de régime permanent (90) est configuré d'une manière telle qu'il reçoit le coefficient de la résistance au roulement du bandage en état de régime permanent, à partir du module de détermination du coefficient de l'état de régime permanent (54) et d'une manière telle qu'il estime une température du bandage en état de régime permanent ; et
un module de coefficient de résistance au roulement en temps réel (92) qui est mis en communication par voie électronique avec le processeur (40) ; dans lequel le coefficient de résistance au roulement en temps réel (92) est configuré d'une manière telle qu'il reçoit la température du bandage en état de régime permanent à partir du module de la température du bandage en régime permanent et d'une manière telle qu'il estime un coefficient de résistance du bandage au roulement en temps réel à partir du coefficient de résistance au roulement en état de régime permanent et d'une différence entre la température du bandage en état de régime permanent et une température du bandage en vigueur à partir de l'unité (26) faisant office de capteur pour un bandage.

2. Système selon la revendication 1, dans lequel le coefficient de résistance au roulement en temps réel représente le coefficient que l'on obtient dans des conditions de fonctionnement transitoires du bandage (12).

3. Système selon la revendication 1 ou 2, dans lequel le module de détermination du coefficient de l'état de régime permanent (54) est configuré d'une manière telle qu'il utilise un modèle de régression (58).

4. Système selon au moins une des revendications précédentes, dans lequel le modèle de régression (58) englobe un modèle de régression linéaire multiple.

5. Système selon au moins une des revendications précédentes, dans lequel lesdites plusieurs entrées englobent au moins une entrée qui est choisie parmi une charge du bandage, une pression de gonflage du bandage, un état d'usure du bandage et une vitesse de roue du bandage.

6. Système selon au moins une des revendications précédentes, dans lequel le module de détermination du coefficient de l'état de régime permanent (54) englobe une composante d'usure ; dans lequel la composante d'usure est configurée d'une manière telle qu'elle établit une corrélation entre des valeurs de l'état d'usure du bandage et des valeurs correspondantes de résistance au roulement ; et/ou dans lequel le module de détermination du coefficient de l'état de régime permanent (54) englobe une composante de charge ; dans lequel la composante de charge est configurée d'une manière telle qu'elle établit une corrélation entre des valeurs de la charge du bandage et des valeurs correspondantes de résistance au roulement ; et, de manière facultative, dans lequel la composante de charge est configurée d'une manière telle qu'elle prend en compte l'état d'usure du bandage.

7. Système selon au moins une des revendications précédentes, dans lequel le module de détermination du coefficient de l'état de régime permanent (54) englobe une composante de pression ; dans lequel la composante de pression est configurée d'une manière telle qu'elle établit une corrélation entre des valeurs de la pression de gonflage du bandage et des valeurs correspondantes de résistance au roulement ; et, de manière facultative, dans lequel la composante de pression est configurée d'une manière telle qu'elle prend en compte l'état d'usure du bandage.

8. Système selon au moins une des revendications précédentes, dans lequel le module de détermination du coefficient de l'état de régime permanent (54) englobe une composante de vitesse de roue ; dans lequel la composante de vitesse de roue est configurée d'une manière telle qu'elle établi une corrélation entre des valeurs de la vitesse de roue et des valeurs correspondantes de résistance au roulement ; et, de manière facultative, dans lequel la composante de vitesse de roue est configurée d'une manière telle qu'elle prend en compte l'état d'usure du bandage.

9. Système selon au moins une des revendications précédentes, dans lequel le module de la température du bandage en état de régime permanent (90) est configuré d'une manière telle qu'il estime la température du bandage en état de régime permanent en se basant sur le coefficient de résistance au roulement du bandage en état de régime permanent, sur une charge du bandage et sur une vitesse de roue du bandage ; et de manière facultative dans lequel le module de la température du bandage en état de régime permanent est configuré d'une manière telle qu'il prend en compte une température ambiante.

10. Système selon au moins une des revendications précédentes, dans lequel le module de la température du bandage en état de régime permanent (90) est configuré d'une manière telle qu'il prend en compte un rapport entre une température initiale du bandage qui a été mesurée à partir de l'unité (26) faisant office de capteur pour un bandage et une pression initiale du bandage qui a été mesurée à partir de l'unité faisant office de capteur pour un bandage.

11. Système selon au moins une des revendications précédentes, dans lequel le module de la température du bandage en état de régime permanent (90) est configuré d'une manière telle qu'il prend en compte une pression de gonflage du bandage en vigueur qui a été mesurée à partir de l'unité faisant office de capteur pour un bandage.

12. Système selon au moins une des revendications précédentes, dans lequel le coefficient de résistance au roulement en temps réel (92) englobe un modèle linaire (58).

13. Système selon au moins une des revendications précédentes, dans lequel le coefficient de résistance au roulement en temps réel (92) est configuré d'une manière telle qu'il utilise une fonction de l'état d'usure du bandage.

14. Procédé d'estimation de la résistance au roulement manifestée par un bandage, dans lequel le procédé estime un coefficient de résistance au roulement en temps réel d'un bandage (12) qui supporte un véhicule (14), dans lequel le procédé englobe le fait de :
procurer une unité (26) faisant office de capteur pour un bandage, qui est montée sur le bandage (12) ; dans lequel l'unité (26) faisant office de capteur pour un bandage mesure une pression de gonflage du bandage et une température du bandage ;
- procurer un processeur (40) qui est mis en communication par voie électronique avec l'unité (26) faisant office de capteur pour un bandage ;
procurer un module de détermination du coefficient de l'état de régime permanent (54) qui est mis en communication par voie électronique avec le processeur; dans lequel le module de détermination du coefficient de l'état de régime permanent reçoit un certain nombre d'entrées et détermine un coefficient de résistance au roulement du bandage en état de régime permanent ;
procurer un module de la température du bandage en état de régime permanent qui est mis en communication par voie électronique avec le processeur; dans lequel le module de la température du bandage en état de régime permanent reçoit le coefficient de la résistance au roulement du bandage en état de régime permanent, à partir du module de détermination du coefficient de l'état de régime permanent et estime une température du bandage en état de régime permanent ; et
procurer un module de coefficient de résistance au roulement en temps réel (92) qui est mis en communication par voie électronique avec le processeur ; dans lequel le coefficient de résistance au roulement en temps réel reçoit la température du bandage en état de régime permanent à partir du module de la température du bandage en régime permanent et estime un coefficient de résistance du bandage au roulement en temps réel à partir du coefficient de résistance au roulement en état de régime permanent et d'une différence entre la température du bandage en état de régime permanent et une température du bandage en vigueur à partir de l'unité (26) faisant office de capteur pour un bandage.

15. Procédé selon la revendication 14, dans lequel le procédé est mis en œuvre par l'utilisation d'un système (10) en conformité avec au moins une des revendications 1 à 13.
